# EUROPÄISCHE PATENTSCHRIFT

(11) **EP 0 510 558 B1**
(45) Veröffentlichungstag und Bekanntmachung des Hinweises auf die Patenterteilung: **13.07.1994**
(21) Anmeldenummer: 92106731.0
(22) Anmeldetag: 21.04.1992
(51) Int. Cl.: B60J 7/02

(54) **Wasserablaufeinrichtung für Rahmen von Fahrzeuglüftungsdächern**
Water drainage arrangement for vehicle sunroof
Dispositif de drainage pour cadre de toit ouvrant pour véhicule

(30) Priorität: 26.04.1991 DE 4113670
(43) Veröffentlichungstag der Anmeldung: 28.10.1992
(73) Patentinhaber: Rockwell Golde GmbH, 60314 Frankfurt (DE)
(72) Erfinder: Hattass, Rainer, W-6466 Gründau 2 (DE); Weidmann, Brigitte, W-6000 Frankfurt (Main) 1 (DE); Arnold, Rainer, W-6479 Schotten (DE); Federmann, Dieter, W-6450 Hanau (Main) 1 (DE)
(74) Vertreter: Oppermann, Ewald, Dipl.-Ing.

(56) Entgegenhaltungen:
- EP-A- 0 363 912
- DE-A- 3 334 896
- DE-A- 3 835 017
- GB-A- 2 185 449

## Beschreibung

Die Erfindung bezieht sich auf eine Wasserablaufeinrichtung für Rahmen von Fahrzeuglüftungsdächern entsprechend dem Oberbegriff des Patentanspruchs 1.

Wasserablaufeinrichtungen an Schiebedachrahmen, die der Ableitung von über die Randspaltabdichtung eingedrungenem Niederschlags- und Waschwasser dienen, sind allgemein üblich und in unterschiedlichen Anbringungsmöglichkeiten von Wasserablaufrohren bekannt. So soll z.B. eine bekannte Konstruktion (DE-C- 39 24 037) eine frühere Ausführung, bei welcher das Ablaufrohr mit einem Blechrahmen verlötet oder verschweißt wird, durch den Vorschlag ersetzen, in ein Wasserablaufrohr aus Blech einen eine Anlagefläche am Rahmen bildenden Bund einzuarbeiten und das Wasserablaufrohr mit dem Rahmen durch Umbördeln oder Vernieten des an den Bund anschließenden und durch den Rahmendurchbruch hindurchgesteckten Endes des Wasserablaufrohres fest zu verbinden. Bekannt ist es auch, (DE-A- 33 34 896) ein Wasserablaufrohr aus Kunststoff, den Rand eines Durchbruchs beidseitig umfassend, an dem Schiebedachrahmen unmittelbar durch Anspritzen anzuformen. Bei einem weiteren der eingangs angegebenen Gattung angehörenden Vorschlag (EP-A- 0 395 127) besteht die Wasserablaufeinrichtung aus zwei Teilen, nämlich einem Rohrstück mit einem Bund, welches durch einen Durchbruch in der Rahmenwand von innen nach außen hindurchgesteckt ist und an seinem nach außen gerichteten Rohrumfang radial angeordnete zahnförmige Rastelemente aufweist, an welchen ein über das Rohrstück aufgeschobenes Hülsenteil mit Gegenrastelementen verrastet und die Rahmenwand zwischen Rohrbund und Hülsenteil abdichtend einspannen soll.

Allen diesen bekannten Ausführungsformen ist der Nachteil gemeinsam, daß die Wasserablaufrohre starr mit dem Rahmen verbunden sind, nach außen über die Rahmenkontur vorstehen und somit bei mit Schiebedächern ausgestatteten Fahrzeugen für die Insassen eine Verletzungsgefahr im Kopfbereich bilden, weil die das Fahrzeugdach innen abdeckende Himmelbespannung herkömmlicherweise als Stoff- oder Kunststoffbespannung ausgeführt ist. Diese Himmelbespannung verdeckt zwar die Wasserablaufrohre, kann jedoch die davon ausgehende Verletzungsgefahr nicht beseitigen. Ein weiterer Nachteil der mit dem Schiebedachrahmen starr verbundenen und über die Rahmenaußenkontur vorstehenden bekannten Wasserablaufrohre zeigt sich beim Transportieren von einbaufertig vorbereiteten kompletten Schiebedacheinheiten, deren tragendes Element der Rahmen ist. Unsachgemäßes Handhaben kann dabei leicht zu Beschädigungen durch Verbiegen oder Bruch der nach außen und unten vorstehenden Wasserablaufrohre führen. Sind die Wasserablaufrohre mit Blechrahmen verschweißt, verlötet oder verstemmt, erfordern diese Verbindungsvorgänge einen hohen manuellen Arbeits-, Zeit- und Kontrollaufwand, welcher bei Serienherstellung unerwünscht ist.

Weiterhin ist es bei einem Schiebedachrahmen (DE-A- 16 05 936) bekannt, die Wasserabflußeinrichtung als rohrförmige Leitung mit einem angeschweißten Formstück aus federnd nachgiebigem Werkstoff auszubilden und diese in einer Öffnung in der Rahmenseitenwand zu befestigen. Bei der Montage wird die Leitung in die Öffnung der Rahmenseitenwand eingefädelt und dann soweit hindurchgezogen, bis das Formstück in der Öffnung festsitzt. Bei dieser bekannten Ausführung sind zwar die vorhergehend geschilderten Nachteile beseitigt, jedoch ist der Sitz des Formstücks in der Öffnung hinsichtlich der erzielbaren Dichtigkeit kritisch, weil bei der Gesamtlänge des Formstücks und der rohrförmigen Leitung das Formstück durch Biege- oder Stoßbeanspruchung, wie sie z.B. bei Transporten auftreten können, leicht aus der Öffnung der Rahmenseitenwand herausgezogen oder zumindest darin verschoben werden kann.

Der Erfindung liegt die Aufgabe zugrunde, eine Wasserablaufeinrichtung für Rahmen von Fahrzeuglüftungsdächern bereitzustellen, die eine hohe Sicherheit gegen Verletzungen bietet, die Gefahr von Transportschäden verringert, eine einfache Serienfertigung erlaubt, eine zuverlässige Wasserabdichtung gewährleistet und universell für Lüftungsdächer einsetzbar ist.

Die gestellte Aufgabe wird ausgehend von der eingangs angegebenen Gattung erfindungsgemäß durch die kennzeichnenden Merkmale des Patentanspruchs 1 gelöst. Vorteilhafte Weiterbildungen der Erfindung sind in den Unteransprüchen angegeben und nachstehend näher erläutert.

Bei der erfindungsgemäßen Wasserablaufeinrichtung ist das Wasserablaufrohr dreh- und verschwenkbar am Rahmen angeordnet, wobei durch entsprechende Dimensionierung und Ausbildung der Kugelgelenkteile eine ausreichende Schwergängigkeit erzielbar ist um eine Richtungseinstellung des Wasserablaufrohrs beizubehalten, solange nicht äußere Kräfte auf das Wasserablaufrohr zur Einwirkung gelangen.

Unter dem hier verwendeten Begriff Fahrzeuglüftungsdächer sollen Schiebedächer, Schiebehebedächer, Oberfirstschiebedächer, Lüftungsklappen u. dgl. verstanden werden. Diesen Dächern liegt im allgemeinen ein Dachrahmen zugrunde, welcher entweder als eigensteife Wanne aus Blechmaterial tiefgezogen zum Einsatz kommt, oder als einteiliger, nach hinten offener und U-förmig gebogener Führungsrahmen aus Strangpreßprofil Anwendung findet. In den Dachrahmen sind überlicherweise außer Führungseinrichtungen für die Schiebedachbetätigung Wasserkanäle vorgesehen, welche das eventuell durch die Randspaltabdichtung zwischen Schiebedeckel und Dachausschnittskante eingedrungene Wasser auffangen und dieses durch die Wasserablaufrohre nach außen hin abführen. Diese Wasserkanäle befinden sich regelmäßig vorn und seitlich unterhalb des vorderen bzw. der seitlichen Deckelränder und erstrecken sich unterhalb der hinteren festen Dachfläche weiter nach hinten. Durch den hinteren Deckelrand eingedrungenes Wasser wird dabei über eine getrennte, nicht mit dem Rahmen einstückige, verschiebbare Wasserrinne in die seitlichen Wasserkanäle des Rahmens abgeleitet.

Auf die die äußere Wasserkanalwand durchdringenden Wasserablaufrohre sind auf ihre nach außen vorstehenden Enden üblicherweise flexible Schläuche aufgesteckt, deren freien Enden in die oberen Öffnungen der A-, B- oder C-Säulen der Fahrzeugkarosserie eingesteckt sind. Dabei sind am Schiebedachrahmen meistens vordere und hintere Wasserablaufrohre vorgesehen, welche so in Richtung und Neigung zum Rahmen an diesem angebracht sind, daß sich ihre äußeren Enden den oberen Öffnungen der Karosseriesäulen gegenüberliegend befinden, um eine möglichst geradlinige Führung der auf die Wasserablaufrohre aufgesteckten Wasserschläuche zu gewährleisten.

Da die Anordnung der Karosseriesäulen von der Karosserieform der einzelnen Kraftfahrzeugtypen bestimmt wird, sind ihre Lage und ihr gegenseitiger Abstand unterschiedlich. Nach dem Stande der Technik ist es daher notwendig, für nahezu jeden Fahrzeugtyp ein angepaßtes Schiebedach bereitzustellen, bei dem die Wasserablaufrohre des Rahmens mit der Lage der Öffnungen der Karosseriesäulen übereinstimmen.

Durch die bei der erfindungsgemäßen Ausgestaltung der Wasserablaufeinrichtung dreh- und verschwenkbare Anbringung der Wasserablaufrohre am Rahmen läßt sich erreichen, daß in gleichbleibenden Abmessungen in großen Stückzahlen hergestellte Dachrahmen bei Fahrzeuglüftungsdächern verwendet werden können, die in unterschiedliche Fahrzeugtypen eingebaut werden sollen. Diese Maßnahme führt aber nicht nur zu einer beträchtlichen Verringerung der Rahmenherstellkosten, sondern auch zu einer Verringerung derjenigen Dachrahmen und Dacheinheiten, welche Beschädigung oder Bruch der Wasserablaufrohre infolge unsachgemäßen Transports unbrauchbar geworden sind. Zur Vermeidung von Transportschäden lassen sich die erfindungsgemäß ausgebildeten Wasserablaufrohre in eine Nichtgebrauchslage innerhalb der Rahmenaußenkontur verschwenken und beim Einbau des Daches in die Fahrzeugkarosserie in eine Gebrauchslage verbringen, in welcher sie mit den aufgesteckten Schläuchen den Öffnungen der Karosseriesäulen gegenüberstehen.

Bei Dachrahmen, welche als einteilige aus Strangpreßprofil U-förmig gebogene Führungsrahmen ausgeführt sind, werden fertigungsbedingt die Ecken im Bereich des Wasserkanals vor dem Biegevorgang ausgeschnitten. Nach dem Biegevorgang werden die Ecken durch Formteile aus Kunststoff ergänzt, welche den Wasserkanal unterbrechungslos um die Ecken von den Rahmenlängsteilen zum Rahmenquerteil führen. Die hinteren Enden der Rahmenlängsteile werden dabei durch Formteile aus Kunststoff abgeschlossen, so daß hier der Wasserkanal an einer nach oben stehenden Wand endet. Bei dieser Rahmenausgestaltung ist das Hülsenteil vorteilhaft Bestandteil des in den Ausschnitt des Rahmens einzufügenden Formteils bzw. des Rahmenabschlußstückes.

Weitere Einzelheiten der Erfindung werden nachfolgend anhand der Ausführungsbeispiele darstellenden Zeichnungen näher erläutert. Darin zeigt:
- Fig. 1: die abgebrochene Draufsicht auf ein Fahrzeugdach mit daran angebrachtem aus einem Strangpreßprofil gebogenen Rahmen, ohne den der Dachöffnung zugeordneten Deckel,
- Fig. 2: die abgebrochene Draufsicht auf eine vordere Ecke des in Fig. 1 gezeigten Rahmens,
- Fig. 3: den Schnitt entlang der Linie III-III in Fig. 2,
- Fig. 4: in einer perspektivischen Ansicht die Rahmenecke gemäß Fig. 2 vor der Anbringung des Einsatzes im Ausschnitt des Rahmens,
- Fig. 5: die teilweise aufgebrochene Draufsicht auf den in Fig. 4 gezeigten Einsatz,
- Fig. 6: den Schnitt durch ein Wasserablaufrohr entlang der Linie IV-IV in Fig. 5,
- Fig. 7: eine perspektivische Ansicht eines aus Blech tiefgezogenen einteiligen Rahmens,
- Fig. 8: die Draufsicht auf eine vordere Ecke des Rahmens gemäß Fig. 7 und
- Fig. 9: den Schnitt durch das Wasserablaufrohr entlang der Linie IX-IX in Fig. 8.

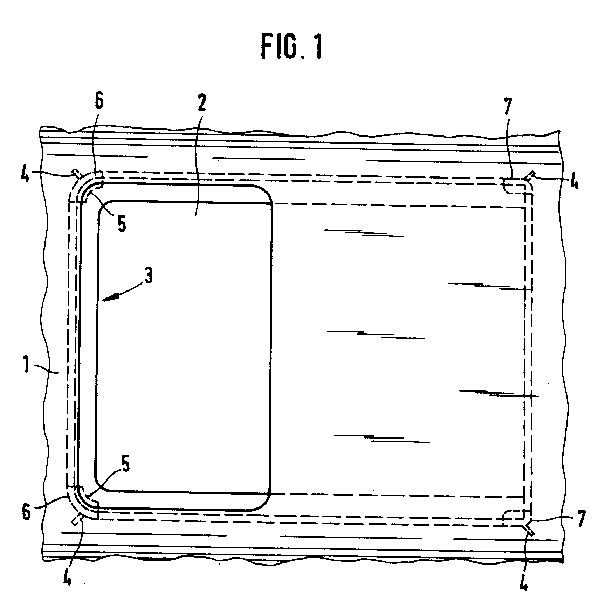

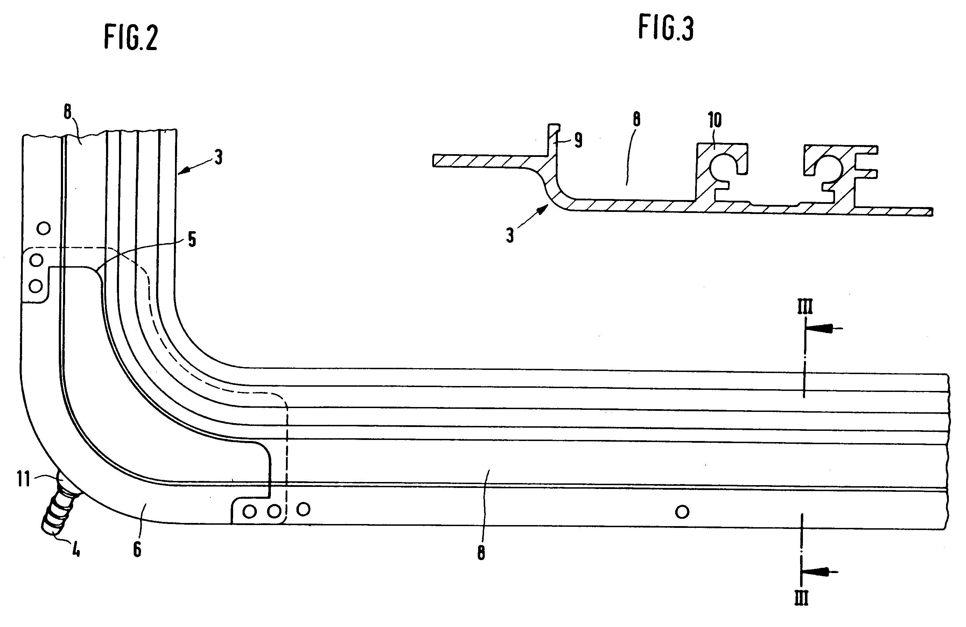

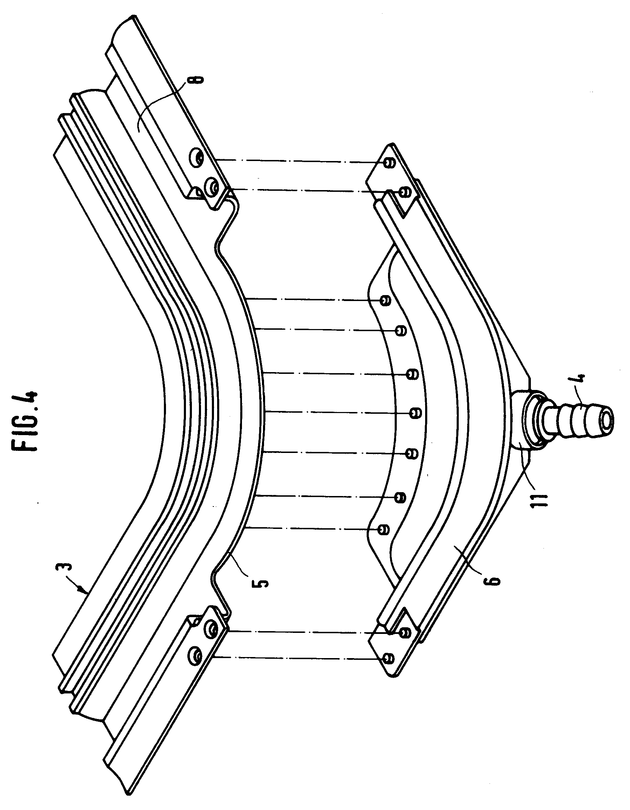

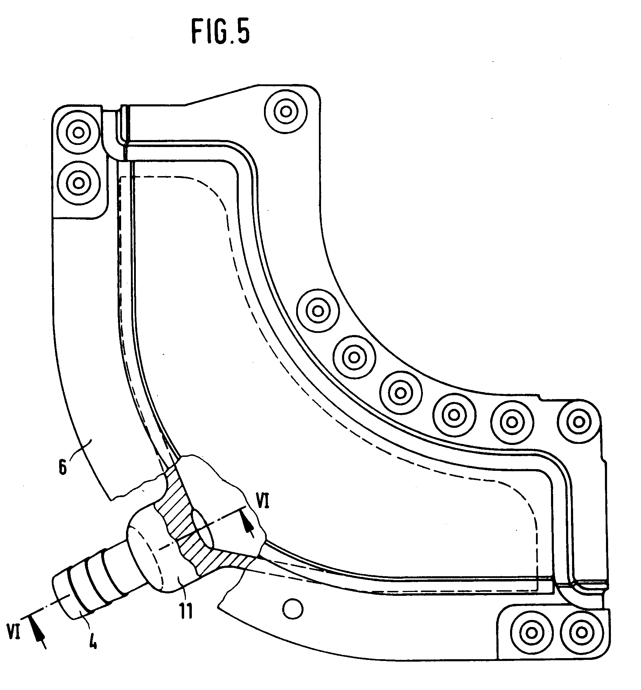

Zur Erläuterung des ersten Ausführungsbeispiels wird zunächst auf die Fig. 1 bis 6 Bezug genommen. Das in Fig. 1 dargestellte Fahrzeugdach 1 weist eine Dachöffnung 2 auf, über deren vordere und die beiden seitlichen Kanten ein Dachrahmen 3 nach innen vorsteht. Der Dachrahmen ist aus einem Strangpreßprofil U-förmig gebogen und weist an seinen vier Ecken jeweils ein Wasserablaufrohr 4 auf. Die darauf aufzusteckenden, zu den Karosseriesäulen führenden Schläuche sind nicht dargestellt. Wie Fig. 1 in Verbindung mit den Fig. 2 und 4 illustriert, sind die beiden vorderen Rahmenecken zur Biegeerleichterung von außen her jeweils mit einem Ausschnitt 5 versehen, dem jeweils ein Einsatz 6 zugeordnet ist. An den beiden hinteren Enden des Rahmens 3 befinden sich Abschlußstücke 7.

Der profilierte Rahmen 3 weist einen durchgehenden Wasserkanal 8 auf, der auf seiner Außenseite durch eine Wandung 9 und auf seiner Innenseite durch ein Führungsschienenprofil 10 begrenzt ist. Wie aus den Fig. 2 und 4 hervorgeht, sind die Einsätze 6 den Ausschnitten 5 so angepaßt, daß die Einsätze die Ausschnitte 5 nach der Anbringung formschlüssig ausfüllen, wobei der Wasserkanal 8 unterbrechungslos um die Rahmenecken herumgeführt ist. Die an den hinteren Enden der seitlichen Rahmenteile angebrachten Abschlußstücke sind so ausgebildet und angebracht, daß sie die hinteren Enden des Wasserkanals 8 dicht abschließen.

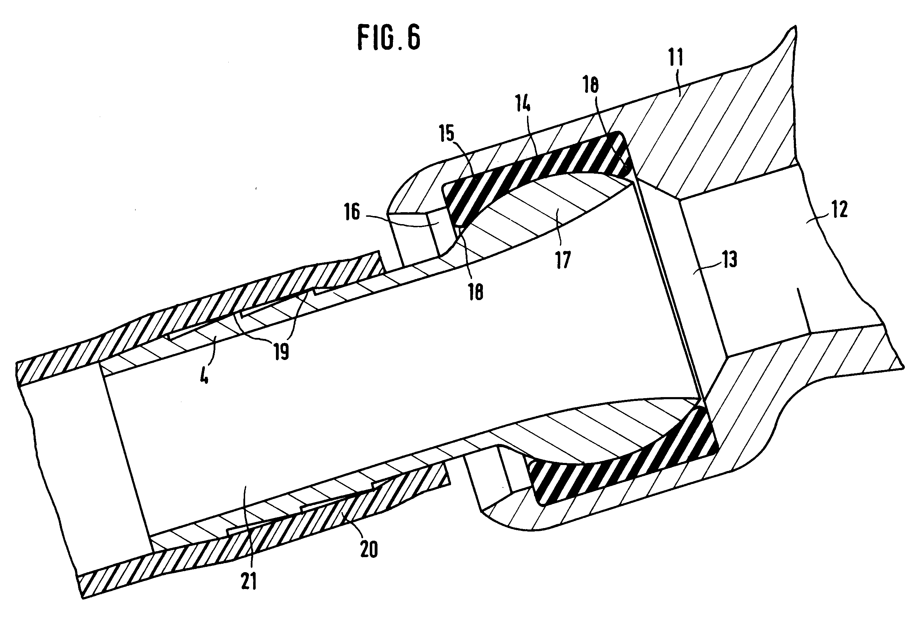

An die Einsätze 6 und Abschlußstücke 7 sind rohrförmig ausgebildete Hülsenteile 11 anformt, die nach außen und geringfügig nach unten geneigt vorspringen. Die Hülsenteile 11 umschließen Ablaufkanäle 12, die auf noch zu beschreibende Weise besonders ausgebildet sind und an den Wasserkanal 8 stufenlos anschließen. Wie aus Fig. 6 hervorgeht, erweitert sich der Ablaufkanal 12 nach außen hin über einen konischen Übergang 13, der an eine zylindrische Ringnut 14 größeren Durchmessers anschließt. In der Ringnut 14 ist ein Klemm- und Dichtring 15, der aus einem elastomeren Material einteilig geformt ist, durch Verrastung festgelegt. Die Breite des Klemm- und Dichtringes entspricht etwa der Breite der Ringnut 14, so daß der Klemm- und Dichtring formschlüssig in der Nut 14 sitzt. Der Ablaufkanal 12 endet nach außen mit einem sich konisch erweiternden Bohrungsabschnitt 16, der sich an die Ringnut 14 unter Bildung einer Ringschulter zur Anlage des Klemm- und Dichtrings 15 anschließt.

Die Innenfläche des Klemm- und Dichtrings 15 ist kugelförmig konkav geformt und entspricht dem entsprechend kugelförmig konvex ausgebildeten Ende 17 des Wasserablaufrohrs 4. Das kugelförmig ausgebildete Ende 17 ist in den elastischen Klemmund Dichtring 15 von außen her formschlüssig eingerastet. Der Klemm- und Dichtring 15 bildet auf diese Weise zusammen mit dem kugelförmig ausgebildeten Ende 17 des Wasserablaufrohrs 4 ein Kugelgelenk, das allseitige Schwenk- und Einstellbewegungen des Wasserablaufrohrs 4 zuläßt. Die Abmessungen der beschriebenen Bauteile sind so aufeinander abgestimmt, daß der Klemm- und Dichtring dem kugelförmig ausgebildeten Ende 17 mit Vorspannung reibend und abgedichtet anliegt, so daß sich das Wasserablaufrohr nur unter Einwirkung äußerer Kräfte verschwenken läßt und in jeder Schwenkstellung zuverlässig mit seinem kugelförmigen Ende 17 gegenüber dem Hülsenteil 11 abgedichtet ist.

Der Klemm- und Dichtring 15 weist mindestens an seiner der Einführung des kugelförmig ausgebildeten Endes 17 des Wasserablaufrohrs 4 beim Verrasten desselben dienenden Seite eine abgerundete Kante 18 zwischen seiner hohlkugelförmigen Innenumfangsfläche und der daran anschließenden Stirnfläche auf. Diese Kante erleichtert das Einführen des kugelförmigen Endes 17 in den schon in seiner Ringnut 14 sitzenden Klemm- und Dichtring 15. Zweckmäßig sind an beiden Seiten abgerundete Kanten 18 angebracht, so daß der Klemm- und Dichtring 15 beidseitig verwendbar ist.

Der mögliche Schwenkwinkel des Wasserablaufrohrs 4 hängt im wesentlichen von der Durchmesserdifferenz in dem Bohrungsabschnitt 16 und dem Außenrohrdurchmesser des Wasserablaufrohrs 4 ab. Das äußere Ende des Wasserablaufrohrs 4 ist am Außenumfang mit sägezahnförmigen Umfangsrippen 19 versehen, auf welche ein flexibler Schlauch 20 festsitzend aufgeschoben ist. Der Innenkanal 21 des Wasserablaufrohrs 4 ist an seinem Eintrittsende trichterförmig erweitert, so daß es bei Schwenkstellungen des Wasserablaufrohrs 4 nicht zu Durchtrittsquerschnittsverengungen zwischen dem Innenkanal 21 und dem benachbarten Bohrungsabschnitt des Ablaufkanals 12 kommen kann.

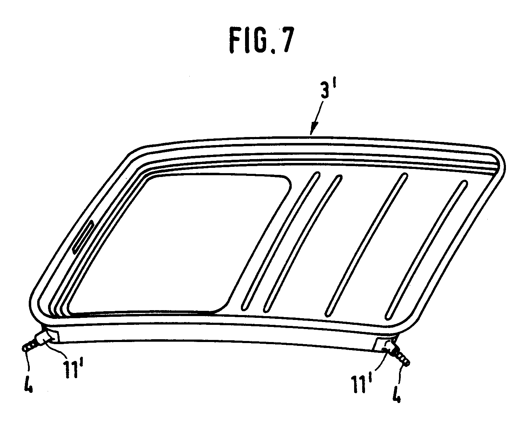

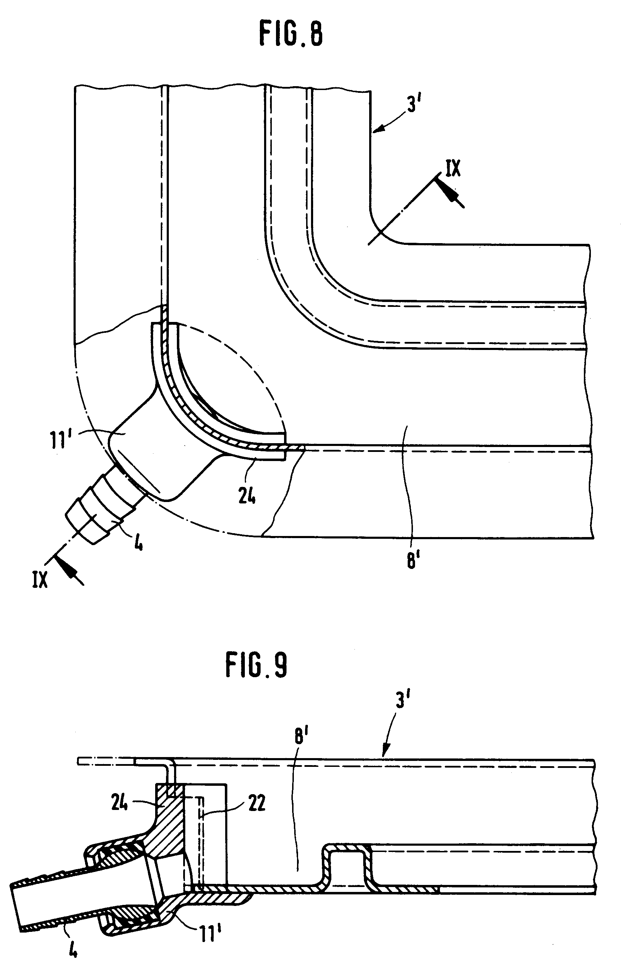

Bei dem zweiten in den Fig. 7 bis 9 dargestellten Ausführungsbeispiel ist die Verwendung der Wasserablaufeinrichtung an einen aus Blech tiefgezogenen einstückigen Dachrahmen 3′ dargestellt. Hierbei sind an allen vier Ecken des Rahmens 3′ Ausschnitte 22 im wesentlichen in der äußeren senkrechten Begrenzungswand 23 des Wasserkanals 8′ vorgesehen. Diese Ausschnitte 22 sind durch mit dem Rahmen 3′ wasserdicht verklebte Formelemente 24 geschlossen, an denen sich einteilig angeformt Hülsenteile 11′ befinden. Die Hülsenteile 11′ sind im wesentlichen so ausgebildet, wie das bereits mit Bezug auf Fig. 6 beschrieben wurde. Entsprechendes gilt für die innerhalb der Hülsenteile 11′ kugelgelenkartig aufgenommenen Wasserablaufrohre 4.

## Patentansprüche

1. Wasserablaufeinrichtung für Rahmen von Fahrzeuglüftungsdächern, mit mindestens einem mit dem Wasserkanal (8, 8′) des Rahmens (3, 3′) kommunizierenden Wasserablaufrohr (4), das außen über den Rahmen vorsteht und an seinem rahmenseitigen Ende zur wasserdichten Befestigung am Rahmen mittels eines Hülsenteils (11, 11′) ausgebildet ist, dadurch gekennzeichnet, daß das rahmenseitige Ende (17) des Wasserablaufrohrs (4) an seinem Außenumfang kugelförmig ausgebildet und kugelgelenkartig in einem komplementär geformten Klemm- und Dichtring (15) aufgenommen ist, der innerhalb des Hülsenteils (11, 11′) festgelegt ist.

2. Wasserablaufeinrichtung nach Anspruch 1, dadurch gekennzeichnet, daß das Hülsenteil (11) einteilig mit dem Rahmenteil (Einsatz 6) ausgebildet ist, an das es anschließt.

3. Wasserablaufeinrichtung nach Anspruch 1, dadurch gekennzeichnet, daß das Hülsenteil (11′) Bestandteil eines in einen Ausschnitt (22) eines aus Blech gefertigten Dachrahmens (3′) einzufügenden Formelements (24) ist.

4. Wasserablaufeinrichtung nach einem der Ansprüche 1 bis 3, dadurch gekennzeichnet, daß der Klemm- und Dichtring (15) am Außenumfang in einer Ringnut (14) des Hülsenteils (11, 11′) durch Verrastung festgelegt ist.

5. Wasserablaufeinrichtung nach Anspruch 4, dadurch gekennzeichnet, daß die Breite des Klemm- und Dichtrings (15) der Breite der Ringnut (14) entspricht.

6. Wasserablaufeinrichtung nach einem der Ansprüche 1 bis 5, dadurch gekennzeichnet, daß das kugelförmig ausgebildete Ende (17) des Wasserablaufrohrs (4) in den im Hülsenteil (11, 11′) festgelegten Klemm- und Dichtring (15) eingerastet ist.

7. Wasserablaufeinrichtung nach einem der Ansprüche 1 bis 6, dadurch gekennzeichnet, daß der Klemm- und Dichtring (15) aus einem elastomeren Material einteilig geformt ist.

8. Wasserablaufeinrichtung nach einem der Ansprüche 1 bis 7, dadurch gekennzeichnet, daß der Klemm- und Dichtring (15) mindestens an seiner der Einführung des kugelförmig ausgebildeten Endes (17) des Wasserablaufrohrs (4) beim Verraste dienenden Seite eine abgerundete Kante (18) zwischen seiner Innenumfangsfläche und der anschließenden Stirnfläche aufweist.

9. Wasserablaufeinrichtung nach einem der Ansprüche 1 bis 8, dadurch gekennzeichnet, daß der Innenkanal (21) des Wasserablaufrohrs (4) an seinem Eintrittsende trichterförmig erweitert ist.

## Claims

1. Water discharge device for frames of vehicle roofs, comprising at least one water discharge pipe (4), communicating with the water channel (8, 8′) of the frame (3, 3′), which pipe projects outwardly beyond the frame and is constructed, at its end nearest the frame, for watertight fixing to the frame by means of a sleeve component (11, 11′), characterized in that the end (17) nearest the frame of the water discharge pipe (4) is spherically shaped at its outer periphery and is seated in the manner of a ball joint in a complementarily shaped clamping and sealing ring (15), which is fixed inside the sleeve component (11, 11′).

2. Water discharge device according to Claim 1, characterized in that the sleeve component (11) is formed in one piece with the frame component (insert 6), which it adjoins.

3. Water discharge device according to Claim 1, characterized in that the sleeve component (11′) is a constituent of a shaped element (24), which is to be inserted into a cut-out (22) of a roof frame (3′) made of metal sheet.

4. Water discharge device according to one of Claims 1 to 3, characterized in that the clamping and sealing ring (15) is secured at its outer periphery in an annular groove (14) of the sleeve component (11, 11′) by locking engagement.

5. Water discharge device according to Claim 4, characterized in that the width of the clamping and sealing ring (15) corresponds to the width of the annular groove (14).

6. Water discharge device according to one of Claims 1 to 5, characterized in that the spherically shaped end (17) of the water discharge pipe (4) is locked into the clamping and sealing ring (15), secured in the sleeve component (11, 11′).

7. Water discharge device according to one of Claims 1 to 6, characterized in that the clamping and sealing ring (15) is moulded in one piece from an elastomeric material.

8. Water discharge device according to one of Claims 1 to 7, characterized in that the clamping and sealing ring (15) possesses, at least at its side that serves for the introduction of the spherically shaped end (17) of the water discharge pipe (4) during the locking engagement, a rounded edge (18) between its internal circumferential surface and the adjoining outer face.

9. Water discharge device according to one of Claims 1 to 8, characterized in that the internal channel (21) of the water discharge pipe (4) is widened out to a funnel shape at its inlet end.

## Revendications

1. Dispositif d'évacuation d'eau pour le cadre de toit ouvrant de véhicule, comportant au moins un tube d'évacuation d'eau (4) communiquant avec le canal d'eau (8, 8′) du cadre (3, 3′), qui fait saillie vers l'extérieur au-delà du cadre et est réalisé au moyen d'un manchon (11, 11′) à son extrémité côté cadre, pour être fixé de manière étanche sur le cadre, caractérisé en ce que l'extrémité (17) côté cadre du tube d'évacuation d'eau (4) est réalisée sur sa périphérie extérieure en forme de sphère et est reçue à la manière d'une articulation sphérique dans un anneau de serrage et d'étanchéité (15) formé de manière complémentaire, qui est fixé à l'intérieur du manchon (11, 11′).

2. Dispositif d'évacuation d'eau selon la revendication 1, caractérisé en ce que le manchon (11) est réalisé d'une seule pièce avec le cadre (insert 6) sur lequel il est raccordé.

3. Dispositif d'évacuation d'eau selon la revendication 1, caractérisé en ce que le manchon (11′) fait partie d'un élément préformé (24) à insérer dans une découpe (22) d'un cadre de toit (3′) fabriqué en tôle.

4. Dispositif d'évacuation d'eau selon l'une quelconque des revendications 1 à 3, caractérisé en ce que l'anneau de serrage et d'étanchéité (15) est fixé par encliquetage sur la périphérie extérieure dans une gorge annulaire (14) du manchon (11, 11′).

5. Dispositif d'évacuation d'eau selon la revendication 4, caractérisé en ce que la largeur de l'anneau de serrage et d'étanchéité (15) correspond à la largeur de la gorge annulaire (14).

6. Dispositif d'évacuation d'eau selon l'une quelconque des revendications 1 à 5, caractérisé en ce que l'extrémité réalisée sous la forme d'une sphère (17) du tube d'évacuation d'eau (4) est encliquetée dans l'anneau de serrage et d'étanchéité (15) fixé dans le manchon (11, 11′).

7. Dispositif d'évacuation d'eau selon l'une quelconque des revendications 1 à 6, caractérisé en ce que l'anneau de serrage et d'étanchéité (15) est formé d'une seule pièce en un matériau élastomère.

8. Dispositif d'évacuation d'eau selon l'une quelconque des revendications 1 à 7, caractérisé en ce que l'anneau de serrage et d'étanchéité (15) présente, au moins sur son côté qui sert, lors de l'encliquetage du tube d'évacuation d'eau (4), à l'introduction de l'extrémité (17) du tube réalisée en forme de sphère, une arête (18) arrondie entre sa surface circonférentielle interne et la surface frontale adjacente.

9. Dispositif d'évacuation d'eau selon l'une quelconque des revendications 1 à 8, caractérisé en ce que le canal intérieur (21) du tube d'évacuation d'eau (4) est évasé à la manière d'un entonnoir à son extrémité d'entrée.
